# EUROPEAN PATENT APPLICATION

(11) **EP 1 407 939 A1**
(43) Date of publication of application: **14.04.2004**
(21) Application number: 03022483.6
(22) Date of filing: 08.10.2003
(51) Int. Cl.: B60R 19/34, B60R 19/24

(54) **An impact absorber device for a motor vehicle**

(30) Priority: 10.10.2002 IT to20020877
(71) Applicant: COMAU S.p.A., 10095 Grugliasco (Torino) (IT)
(72) Inventor: Molina, Giuseppe, 10029 Villastellone (Torino) (IT); Bigando, Mauro, 10136 Torino (DE)
(74) Representative: Fioravanti, Corrado

(57) **Abstract**

An impact absorber device (10) for a motor vehicle includes a pair of elements (20, 30) for connection to a cross member (T) and to the chassis (L) of the vehicle, respectively. Each element (20, 30) has a tubular portion (22, 32) for screwing to a tubular portion (32, 22) of the other element (30, 20). At least one of the two tubular portions (22, 32) has a length which is corrugated or zigzag in longitudinal section and therefore able to collapse as a result of a collision. The overall length (1) of the device (10) can be adjusted by screwing the two elements (20, 30).

## Description

The present invention relates to an impact absorber device for a motor vehicle, of the type identified in the preamble of Claim 1.

A device of the aforesaid type is known, for example, from DE 198 14 842 A1. This document describes an impact absorber device constituted by a generally tubular body which is orientated parallel to the longitudinal axis of the vehicle and interposed between a front cross member and the front end of one of the side members of the vehicle; the tubular body has a side wall forming a longitudinal succession of annular swellings which enable the vehicle to collapse in a controlled manner in the event of a frontal collision.

The object of the present invention is to provide an improved impact absorber device, with the flexibility to be applied to various models of motor vehicle and which offers the possibility of controlling play and assembly tolerances, and which also makes it possible to reduce the expense involved in replacing damaged parts following a collision.

This and other objects and advantages, which will be understood better hereinbelow, are achieved according to the present invention by providing a device having the characteristics defined in Claim 1. The device includes a pair of elements which can be connected to a cross member and to the vehicle chassis respectively. Each element has a tubular portion which can be screwed to the tubular portion of the other element. At least one of the two tubular portions has a length which is corrugated or zigzag in longitudinal section and thus able to collapse in a collision. The overall length of the device can be adjusted by screwing the two elements.

Preferred embodiments of the invention are defined in the dependent Claims.

The structural and operating characteristics of a preferred but non-limitative embodiment of the invention will now be described with reference to the appended drawings, in which:

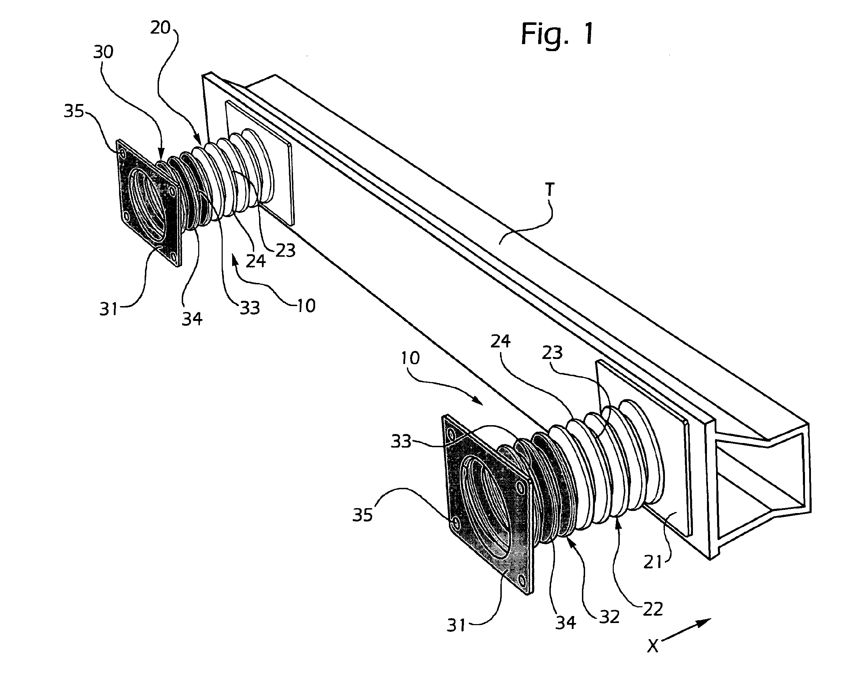

Figure 1 is a perspective view showing a pair of devices according to the invention fitted to a front cross member of a motor vehicle; and

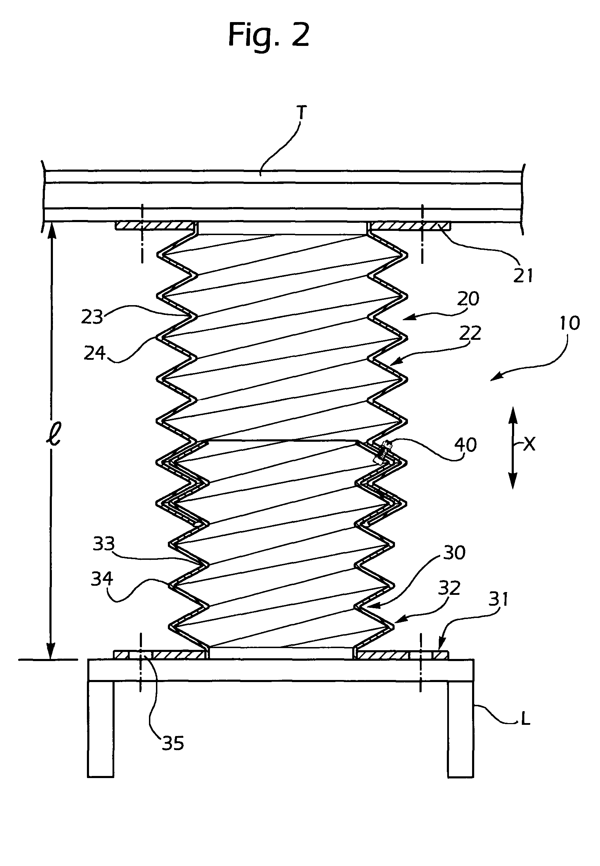

Figure 2 is a schematic view in horizontal longitudinal section of a device of the invention interposed between the front cross member and the front end of a side member of a vehicle.

Throughout the present description and in the Claims, terms and expressions indicating positions and orientations should be understood with reference to their condition once fitted onto a vehicle. The term "longitudinal" is thus to be understood as referring to the longitudinal axis x of the vehicle.

With reference to the drawings, a cross member T of a crash-box type has a pair of devices of the invention at each end, interposed between and connected to the cross member T and one end of a lateral side member L of the vehicle chassis.

Each device 10 includes a pair of elements 20, 30 for connection to the cross member T and the side member L respectively. The elements 20, 30 are made of metal, or in any event a rigid material which is deformed plastically in the event of a collision.

The element 20 has an end flange 21, preferably made of extruded aluminium, for fixing to the cross member T by cold deformation (clinching) for example. The element 20 has a generally tubular portion 22 which can collapse longitudinally and is substantially corrugated or zigzag in longitudinal section. The tubular portion 22 has a series of recesses 23 and projections 24 which form a longitudinal helix pattern and are preferably obtained by a profiling method whereby an initially flat metal element is deformed by pairs of rollers which plastically deform the element until the final desired shape is achieved.

A tubular portion 32 of a second element 30 for fixing to a longitudinal end of the side member L is partially inserted into the tubular portion 22 of the first element 20, coaxially and parallel to the longitudinal axis x of the vehicle. The element 30 has an end flange 31 with holes 35 formed therein for fixing it to the side member L. The tubular portion 32 is shaped so as to have recesses 33 and corresponding projections 34 following a helical pattern, the pitch thereof corresponding to that of the helix of the first element 20.

The two elements 20 and 30 are joined by screwing them together and thereby adjusting the overall length "l" of the device according to the requirements of the vehicle design.

One or more locking elements such as a rivet, indicated 40, is fitted so as to engage both the tubular portions 22, 32, thereby securing their relative angular and longitudinal positions, once the two elements 20, 30 have been screwed into one another so that the device 10 has the required overall length "l". The rivet 40 is fitted in a plane essentially perpendicular to the longitudinal axis x of the device 10.

Each of the elements 20, 30 making up the device of the invention can be connected to the cross member T and the side member L by self-piercing rivets, clinching or any other fixing method known in the art (with screws for example).

It will be appreciated that the device of the invention can be fitted to vehicles that require different overall lengths "l" and makes it possible to accurately control clearance and tolerances in a direction parallel to the longitudinal axis x. It is also possible to position the two elements 20, 30 relative to each other so as to increase or decrease the longitudinal resistance of the device, by increasing or decreasing the length of the portion along which the two tubular portions 22, 32 are inserted into one another, in dependence on the design requirements. In the event of only one of the elements 20 or 30 being damaged in a collision, it is possible to replace only the damaged element.

Naturally, the principle for the invention remaining unchanged, embodiments and manufacturing details may vary widely from those described and illustrated purely by way of non-limitative example. For example, one of the two elements 20, 30 could have a tubular portion of a shape not corresponding to that of the other element, but having recesses and/or projections operable in any case to engage the helical pattern of the tubular portion of the associated element. Finally, the device of the invention is applicable equally well to a front and/or a rear cross member of a motor vehicle.

## Claims

1. An impact absorber device for a motor vehicle, of the type including a generally tubular body which can be orientated in a direction substantially parallel to the longitudinal axis (x) of the vehicle and interposed between a front or rear cross member (T) and an element (L) of the chassis of the vehicle, wherein said body has at least one lenght which can collapse longitudinally and is corrugated or zigzag in longitudinal section,
**characterised in that** the device (10) includes a pair of elements (20, 30) for connection to the cross member (T) and the chassis (L) respectively, each element (20, 30) having a respective generally tubular portion (22, 32) for coupling it coaxially to the tubular portion (32, 22) of the other element (30, 20), the two elements being couplable in a screwing relationship whereby the overall length (1) of the device (10) is adjustable.

2. A device according to Claim 1, **characterised in that** the tubular portion (22) of a first (20) of the said elements (20, 30) forms recesses (23) and/or projections (24) defining a helical pattern, and the tubular portion (32) of the second element (30) has projections (34) and/or recesses (33) for engaging the recesses and/or projections (23, 24) of the first element (20).

3. A device according to Claim 1, **characterised in that** it also includes at least one locking element (40) for fixing the relative angular and longitudinal positions of the elements (20, 30) once they have been screwed together in a position in which the device (10) has the required overall longitudinal length (1).

4. A device according to Claim 3, **characterised in that** the locking element (40) is positioned so as to engage both the tubular portions (22, 32).

5. A device according to Claims 3 or 4, **characterised in that** the locking element (40) is arranged in a plane essentially perpendicular to the longitudinal axis (x) of the device (10) .

6. A device according to Claims 3, 4 or 5, **characterised in that** the locking element (40) includes a rivet.

7. A device according to Claim 1, **characterised in that** the tubular portions (22, 32) of both elements (20, 30) form respective series of recesses and projections (23, 24; 33, 34) arranged in a helix with the same pitch.

8. A device according to any of the preceding Claims, **characterised in that** the said recesses and projections are obtained by means of a roller profiling process.

9. A device according to Claim 1, **characterised in that** at least one of the elements (20, 30) forms an end flange (21, 31) for fixing to the cross member (T) or to the said element (L) of the vehicle chassis.
